# EUROPEAN PATENT APPLICATION

(11) **EP 3 361 609 A1**
(43) Date of publication of application: **15.08.2018**
(21) Application number: 18152757.3
(22) Date of filing: 22.01.2018
(51) Int. Cl.: H02K 15/00

(54) **MOTOR AND MANUFACTURING METHOD THEREOF**

(30) Priority: 08.02.2017 JP 2017021073
(71) Applicant: Shinano Kenshi Kabushiki Kaisha, Nagano 386-0498 (JP)
(72) Inventor: KANAZAWA, Takatoshi, Ueda-shi, Nagano 386-0498 (JP)
(74) Representative: Addiss, John William

(57) **Abstract**

To provide a motor in which an insulating film of a magnet wire can be reliably peeled off at a target position and connection reliability between the magnet wire of which the insulating film is peeled off and an external connecting terminal is high irrespective of accuracy of a winding machine and presence or absence of an aligning winding.

A crossover wire (11a) is bridged over at least a pair of cross-linking holding portions (lOd) provided in an annular wall (10a) of an insulator (10) via a slit portion (10b), of which an insulating film is peeled off, is welded to a terminal (13) mounted on a terminal mounting portion (10f) to be assembled thereto.

## Description

### Technical Field

The present invention relates to a motor that is used as a driving source, for example, for a heating, ventilation, and air conditioning (HVAC) device for a vehicle, or the like, and a manufacturing method thereof.

### Background Art

In the related art, in a case where a motor is manufactured, a coil is wound around a stator core of a stator by a winding machine via an insulator. As a coil, a magnet wire is used and the coil is wound around the stator core by repeating an operation in which the coil is wound around a stator pole tooth by the winding machine, a crossover wire is wired along the insulator, and the magnet wire is wound around the next stator pole tooth.

For example, the insulators are mounted from both sides of the stator core in a thickness direction and then a terminal (external connecting terminal) is inserted into an insertion portion disposed in the insulator. Next, in a state where the stator core is held by a jig, the magnet wire is wound around the stator pole tooth by using a nozzle winding machine, a flyer winding machine, or the like.

In this case, the magnet wire is coated with an insulating film (high heat-resistant resin material) for reasons such as durability and weather resistance, and it is necessary to weld the insulating film to the terminal by melting and peeling off the insulating film in advance using a welding machine. Therefore, when winding on the stator pole tooth is completed, the winding machine locks the crossover wire to a hook portion of the terminal so as to be wired and the welding machine is pushed against the hook portion and applies an electric current while crushing the magnet wire to perform welding while melting and peeling off the insulating film.

In addition, as a method for electrically connecting a lead wire and a conductor member to each other with a small-scaled facility, a method for connecting the lead wire, which includes a film removing step and a subsequent lead wire connecting step, and is performed by using a laser irradiation device (laser welding machine), is proposed. According to the method, a region including a lead wire connecting portion is irradiated with a laser beam to remove the insulating film by deviating a position of the lead wire connecting portion and a focal position of the laser beam so as to irradiate the lead wire connecting portion with the laser beam, and a position of the connecting terminal and the focal position of the laser beam are made to coincide with each other and substantially one point of the connecting terminal is irradiated with the laser beam to connect the lead wire to the connecting terminal (see PTL 1: JP-A-2008-228532).

### Summary of Invention

### Technical Problem

There are various methods for peeling the insulating film of the magnet wire as described above. In particular, in a case of a thick wire, it is necessary to peel off the insulating film and it is difficult to peel off the insulating film accurately at a fixed welding position. In order to realize this, a shape of a component such as the hook portion is complicated, a welding condition needs to be strictly controlled, and a manufacturing cost increases.

It is possible to wind the magnet wire around the stator core by the winding machine and then irradiate a connecting portion to the terminal with the laser beam to peel off the insulating film, but it cannot be realized due to the terminal as an obstacle.

In addition, it is also conceivable to wind the stator first and retrofit the terminal after removing the insulating film at a necessary portion, and then to weld the terminal with the welding machine. However, if the terminal is retrofitted, it tends to lead to loosening of the tension of the magnet wire. In addition, it is also conceivable to peel off the insulating film of the magnet wire in advance assuming the welding position with the terminal, but there is a concern that the peeling position of the insulating film and the connecting position of the terminal are deviated and the connection reliability is lowered due to elongation of the wire, the accuracy of the winding machine, presence or absence of aligning winding, or the like. Therefore, it is conceivable to widen a range in which the insulating film of the magnet wire is peeled off, but it is not preferable because there is a concern that the crossover wire is short-circuited.

Furthermore, as disclosed in Patent Document 1, the lead wire connecting portion is fixed to a mounting portion (recessed groove) of the insulator and the connecting terminal is irradiated with the laser beam in a direction (axial direction of the motor) orthogonal to a radial direction of the stator in a state where the connecting terminal is superimposed thereon. In a case where removing of the insulating film of the lead wire and bonding of the lead wire and the connecting terminal are performed by using a laser irradiating device, it is necessary to be irradiated with the laser beam while changing an energy level of the laser beam. In this case, first, in order to remove the insulating film, the position of the lead wire connecting portion and the focal position of the laser beam are deviated, the lead wire connecting portion is irradiated with the laser beam, and thereby the insulator (mounting portion) around the lead wire connecting portion is also irradiated with the laser beam. Therefore, there is a concern that the insulator is deformed or damaged.

In addition, in a case where the lead wire and the connecting terminal are bonded, it is necessary to be irradiated with the laser beam while a position of the connecting terminal and the focus position of the laser beam are made to coincide with each other by using a half mirror (beam splitter), maintenance such as cleaning and replacement of optical system components is required, and power consumption also increases.

### Solution to Problem

The invention is made to solve the problems and an aim thereof is to provide a motor in which an insulating film of a magnet wire can be reliably peeled off at a target position and connection reliability between the magnet wire of which the insulating film is peeled off and an external connecting terminal is high irrespective of accuracy of a winding machine and presence or absence of an aligning winding, and a manufacturing method of a motor, in which an assembling workability of the motor is improved and the motor can be manufactured at low cost with simple facility.

In order to achieve the aim, the invention includes the following configurations.

A motor including a stator core that includes a plurality of stator pole teeth radially protruding from an annular core back portion; an insulator that covers the stator core; a coil that is formed by winding a magnet wire around the stator pole teeth via the insulator; a stator that is mounted on the insulator and includes an external connecting terminal electrically connected to the magnet wire; a rotor yoke that rotates around a rotor shaft; and a rotor that includes a rotor magnet disposed in the rotor yoke to face the stator pole teeth. An annular wall is formed in the insulator covering the core back portion, a notch portion is provided in a slot corresponding position of the annular wall, at least a pair of cross-linking holding portions which is provided in both side walls of the notch portion and in which a crossover wire drawn out from the coil is held across the notch portion, and a terminal mounting portion in which the external connecting terminal is mounted on the pair of cross-linking holding portions so as to close the notch portion are provided, and the crossover wire, which is bridged over the pair of cross-linking holding portions and of which the insulating film is peeled off, is welded to the external connecting terminal mounted on the terminal mounting portion to be assembled thereto.

According to the configuration, the crossover wire across the notch portion is bridged over the pair of cross-linking holding portions of the insulator. Therefore, it is possible to provide the motor in which the insulating film of the magnet wire can be reliably peeled off at a target position and the external connecting terminal can be welded to the magnet wire in which the insulating film is peeled off only by inserting the external connecting terminal into the terminal mounting portion, and thereby connection reliability is high irrespective of accuracy of a winding machine and presence or absence of an aligning winding.

It is preferable that the external connecting terminal is formed with a tongue-like cut in a part of the plate-like terminal and a wire clamping portion is formed by cutting and standing a distal end portion in a terminal inserting direction, and the external connecting terminal is assembled by being inserted into the terminal mounting portion and pinching the crossover wire that is held by the pair of cross-linking holding portions across the notch portion in the wire clamping portion.

Therefore, it is possible to assemble the crossover wire held by the pair of cross-linking holding portions across the notch portion in a state of being pinched in the wire clamping portion only by inserting the external connecting terminal into the terminal mounting portion. Therefore, the magnet wire of which the insulating film is peeled off can be reliably clamped and assembled in the wire clamping portion of the external connecting terminal.

A manufacturing method of a motor including a stator core that includes a plurality of stator pole teeth radially protruding from an annular core back portion, an insulator that covers the stator core, a coil that is formed by winding a magnet wire around the stator pole teeth via the insulator, a stator that is mounted on the insulator and includes an external connecting terminal electrically connected to the magnet wire, a rotor yoke that rotates around a rotor shaft, and a rotor that includes a rotor magnet disposed in the rotor yoke to face the stator pole teeth, the method including a step of winding the magnet wire around the stator pole teeth via the insulator while the stator core is held by a jig; a step of bridging a crossover wire drawn out from the coil wound around the stator pole teeth in at least a pair of cross-linking holding portions formed via a notch portion formed in an annular wall formed in the insulator covering the core back portion across the notch portion; a step of peeling off an insulating film of the magnet wire by irradiating the crossover wire bridged over the pair of cross-linking holding portions with a laser beam in a radial direction of the stator core; a step of mounting the external connecting terminal in a terminal mounting portion formed in the pair of cross-linking holding portions with the crossover wire, of which the insulating film is peeled off, clamped therebetween; and a step of electrically connecting the external connecting terminal and the crossover wire clamped thereby to each other by resistance welding.

The crossover wire drawn out from the coil of which winding on the stator pole teeth is completed is bridged over at least the pair of cross-linking holding portions formed via the notch portion formed in the annular wall formed in the insulator across the notch portion. In this state, the insulating film of the connecting portion with the external connecting terminal of the magnet wire can be reliably peeled off by melting and peeling the insulating film of the magnet wire by irradiating the crossover wire with the laser beam in the radial direction irrespective of accuracy of a winding machine and presence or absence of an aligning winding. Particularly, there is no possibility that the laser beam emitted in the radial direction of the stator core is applied to other than the crossover wire and there is no obstacle in the radial direction in which the laser beam is applied. Therefore, processing can be easily performed.

In addition, when the external connecting terminal is mounted on the terminal mounting portion formed at a position corresponding to the notch portion of the insulator, the crossover wire of which the insulating film is peeled off is clamped. Therefore, the assembling workability of the motor is improved and the external connecting terminal and the crossover wire clamped thereby are electrically connected to each other by resistance welding, thereby can be manufactured at low cost with simple facility.

It is preferable that a half circumference portion of the insulating film covering the crossover wire is melted and peeled off by irradiating the crossover wire bridged over the cross-linking holding portions across the notch portion with the laser beam from an outside of the stator core in the radial direction through a gap between the stator pole teeth, and the remaining half circumference portion of the insulating film covering the crossover wire is melted and peeled off by irradiating the crossover wire with the laser beam from an inside of the crossover wire in the radial direction through the gap between the stator pole teeth.

Therefore, in a state where the stator core is fixed by the jig and the magnet wire is wound around the stator pole teeth by using the winding machine, the insulating film can be reliably melted and peeled off by irradiating the crossover wire bridged over the cross-linking holding portions with the laser beam in the radial direction of the stator core through the notch portion. For the crossover wire bridged over the pair of cross-linking holding portions, the crossover wire may be alternately irradiated with the laser beam by disposing the laser irradiating device to face each other. The insulating film may be melted and removed by being irradiated with the laser beam by rotating the jig by 180°.

It is preferable that in the external connecting terminal, a tongue-like cut is formed in a part of the plate-like terminal and a wire clamping portion is formed by cutting and standing a distal end portion in a terminal inserting direction, the crossover wire held by the cross-linking holding portions across the notch portion is pinched by the wire clamping portion, and the external connecting terminal is inserted into the terminal mounting portion.

Therefore, when the external connecting terminal is mounted on the terminal mounting portion, the crossover wire of which the insulating film is peeled off is reliably clamped by the wire clamping portion. Therefore, the assembling workability of the motor is improved.

### Advantageous Effects of Invention

It is possible to provide the motor in which the insulating film of the magnet wire can be reliably peeled off at a target position and connection reliability between the magnet wire of which the insulating film is peeled off and the external connecting terminal is high irrespective of the accuracy of the winding machine and presence or absence of the aligning winding.

In addition, it is possible to provide the manufacturing method of a motor, in which an assembling workability of the motor is improved and the motor can be manufactured at low cost with simple facility.

### Brief Description of Drawings

Figs. 1A to 1E are respectively a plan view, a front view, a sectional view that is taken along arrow A-A, a sectional view that is taken along arrow B-B, and a sectional view that is taken along arrow C-C of a motor.
Figs. 2A to 2F are respectively a perspective view, a plan view, a front view, a sectional view that is taken along arrow A-A, a sectional view that is taken along arrow B-B, and a sectional view that is taken along arrow C-C of a stator before an external connecting terminal is mounted.
Figs. 3A to 3F are respectively a perspective view, a plan view, a front view, a sectional view that is taken along arrow A-A, a sectional view that is taken along arrow B-B, and a sectional view that is taken along arrow C-C of the stator after the external connecting terminal is mounted.

### Description of Embodiments

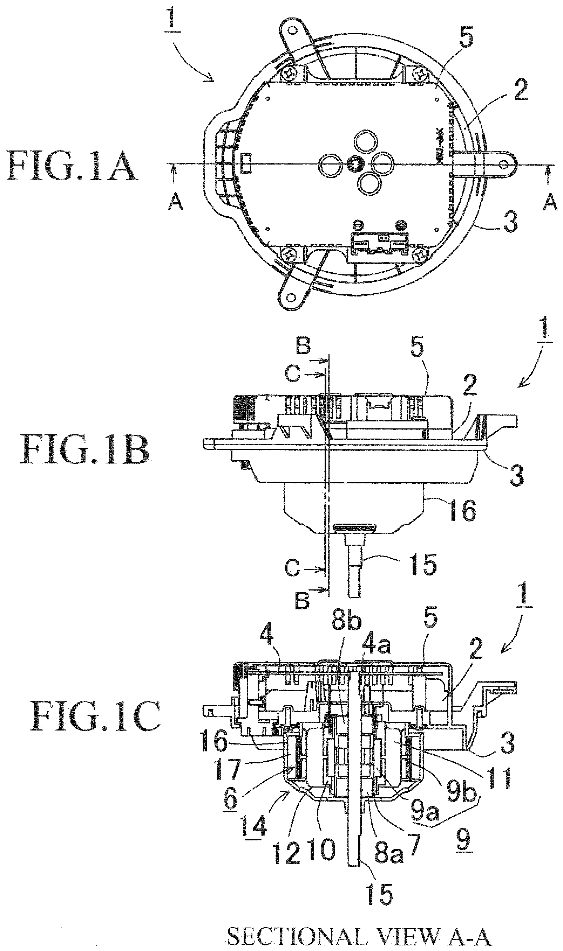

Hereinafter, an embodiment of a motor and a manufacturing method thereof according to the invention will be described with reference to Figs. 1A to 3F. In the embodiment, a radial gap type outer rotor type motor will be described as an example. As the outer rotor type motor, a DC brushless motor is used.

In Figs. 1A to 1E, a structure of a motor 1 will be described. A board case 2 and a motor base portion 3 are integrally assembled. A motor board 4 is fixed and stored to and in the board case 2. The motor board 4 is formed with a motor driving circuit. The motor board 4 is stored by fixing a cover 5 to the board case 2 with screws (see Fig. 1C).

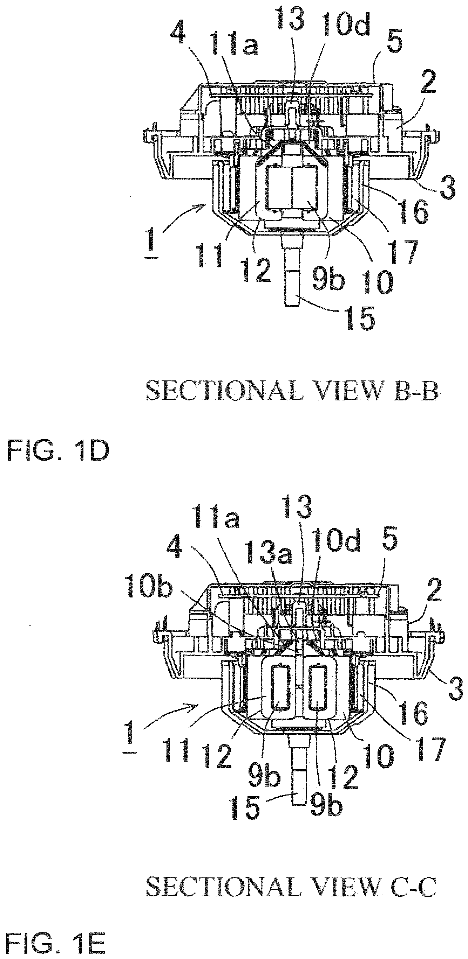

A structure of a stator 6 will be described. As illustrated in Fig. 1C, a cylindrical bearing housing 7 is assembled on the motor base portion 3. Bearings (ball bearings) 8a and 8b are assembled on an inner peripheral surface of the bearing housing 7. In addition, a stator core 9 is assembled on an outer peripheral surface of the bearing housing 7. As the stator core 9, a laminated core in which an electromagnetic steel plate is laminated is used. A plurality of stator pole teeth 9b are radially protruded from an annular core back portion 9a. An end surface of the stator core 9 is covered with an insulator 10 which is divided. A coil 12 is formed by winding a magnet wire 11 around the stator pole teeth 9b via the insulator 10. In addition, a terminal 13 (external connecting terminal) is mounted on the insulator 10 and as described below, is electrically connected to the magnet wire 11 (see Figs. 1D and 1E).

Next, a structure of a rotor 14 will be described. A rotor shaft 15 is inserted into the bearing housing 7 and rotatably supported by the bearings 8a and 8b (see Fig. 1C). As illustrated in Fig. 1C, a cup-shaped rotor yoke 16 is integrally assembled to one end side of the rotor shaft 15 by press fitting, adhesion, shrink fitting, or the like. A rotor magnet 17 is annularly assembled on the inner peripheral surface of the rotor yoke 16. The rotor yoke 16 is assembled so that the rotor magnet 17 is disposed to face a magnetic flux acting surface (distal end surface) of the stator pole tooth 9b.

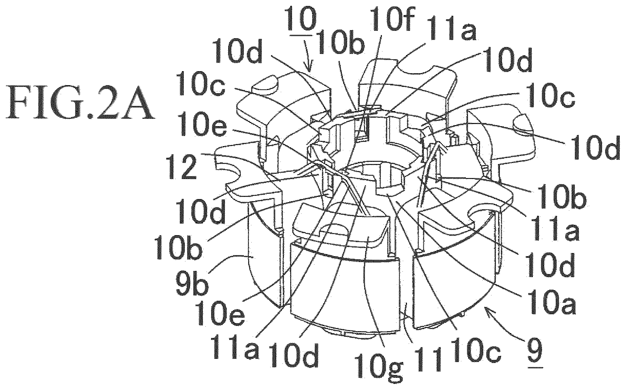

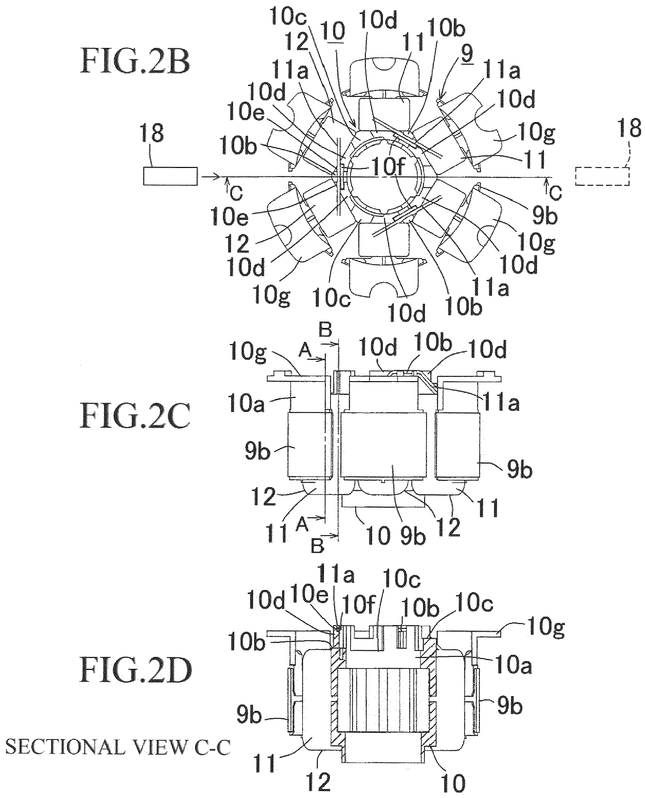

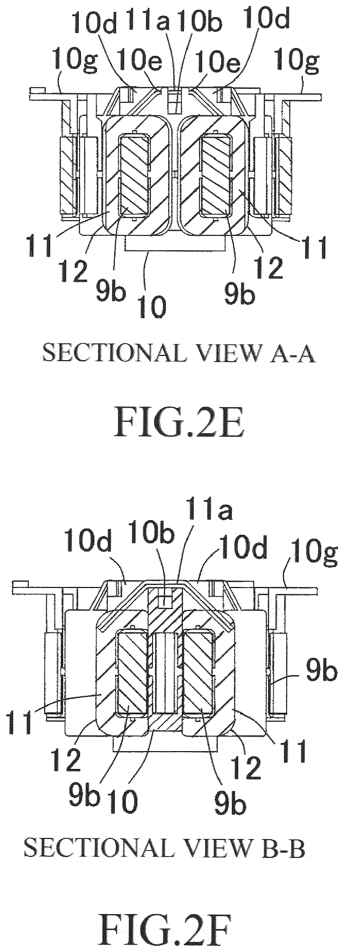

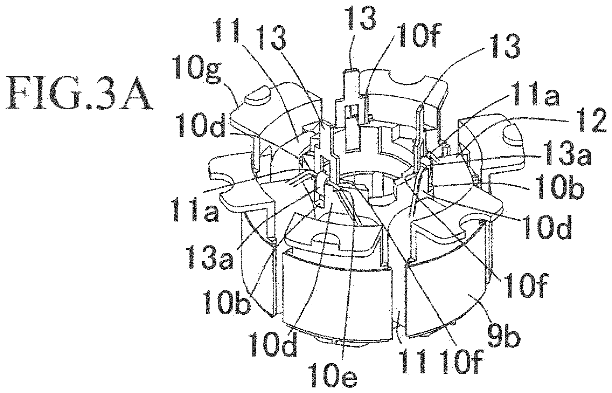

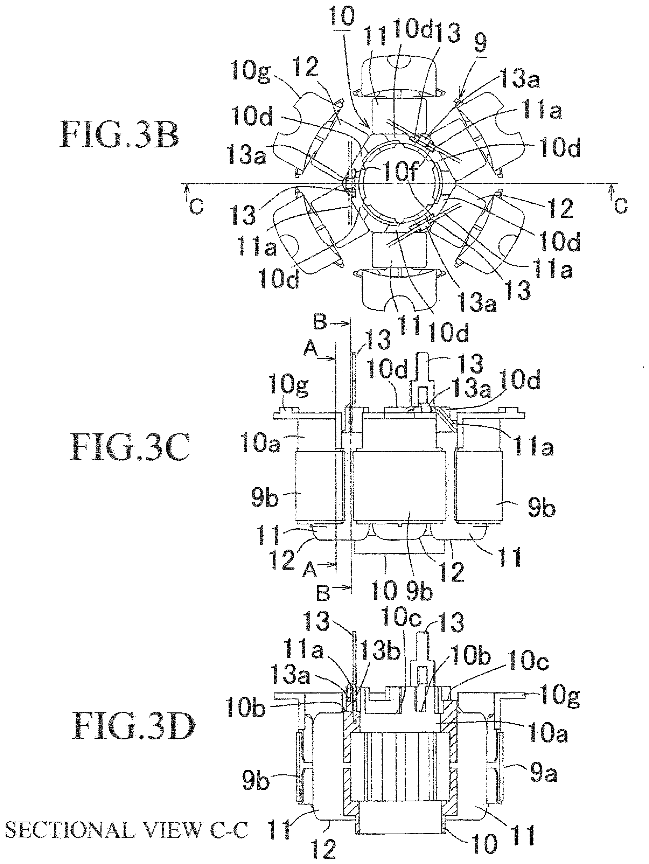

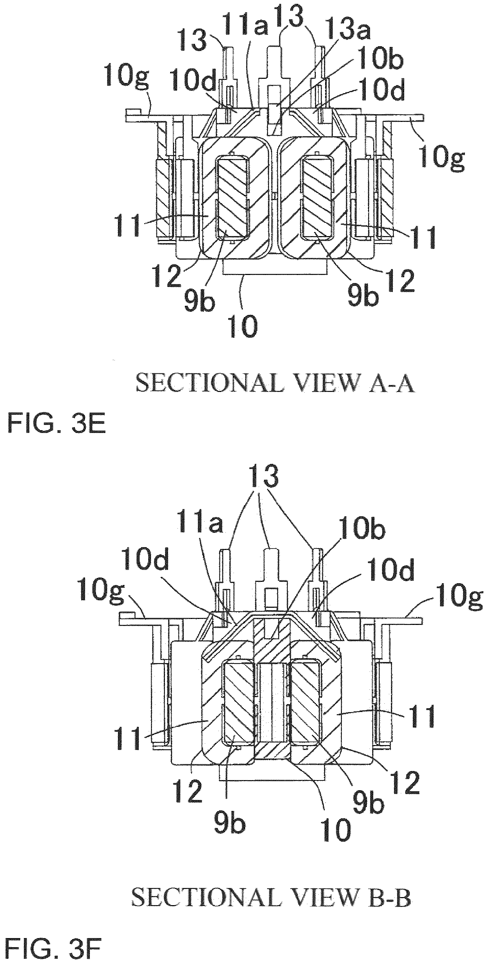

Here, a configuration of the stator 6 will be described in detail with reference to Figs. 2A to 2F, and Figs. 3A to 3F. As illustrated in Figs. 2A and 2B, an annular wall 10a is formed in the insulator 10 covering the core back portion 9a of the stator core 9. Three slit portions 10b and three partitioning recessed portions 10c (notch portions) are alternately disposed at slot corresponding positions of the annular wall 10a between the stator pole teeth 9b. In the example, since a three-phase motor is used, three crossover wires corresponding to U, V, and W phases are required. If the number of phases of the motor is different, the number of the slit portions 10b is not limited to three.

In addition, at least a pair of cross-linking holding portions 10d is disposed on both sides of the slit portion 10b. In the example, as illustrated in Figs. 2A and 2B, since the three slit portions 10b are provided, three pairs of cross-linking holding portions 10d standing on the both sides of the slit portions 10b are also provided. A pair of recessed grooves 10e is respectively formed in the distal end portion of each of the pair of cross-linking holding portions 10d. A crossover wire 11a drawn out from the coil 12 is held across the slit portion 10b via the pair of recessed grooves 10e (see Figs. 2C to 2F). The crossover wire 11a held by the pair of recessed grooves 10e is wired along the outer peripheral surface of the cross-linking holding portion 10d (see Fig. 2A). As illustrated in Figs. 2A and 2B, six flange portions 10g are formed on a distal end side of each of the stator pole teeth 9b in the radial direction outward in the radial direction. As described below, the flange portion 10g is used for aligning when the stator 6 is assembled in the motor base portion 3, and the stator 6 is locked to an outer peripheral edge portion of the flange portion 10g with screws to be assembled in the motor base portion 3.

In addition, as illustrated in Figs. 3A and 3B, a terminal mounting portion 10f on which the terminal 13 is mounted is formed on an inner peripheral surface side of the pair of cross-linking holding portions 10d adjacent to the slit portion 10b so as to close the slit portion 10b. The plate-like terminal 13 is mounted by being inserted along recessed grooves of the terminal mounting portion 10f guiding the both sides. In addition, as described below, in the crossover wire 11a bridged over the cross-linking holding portions 10d, the insulating film is peeled off and the crossover wire 11a is welded to the terminal 13 mounted on the terminal mounting portion 10f to be assembled.

As the terminal 13, a plate-like conductive metal terminal is used. The terminal 13 is formed with a tongue-like cut in a part thereof and a wire clamping portion 13a formed by cutting and standing a distal end portion in a terminal inserting direction (see Figs. 3A, 3D, and 3E).

The terminal 13 is assembled in a state where the crossover wire 11a in which the insulating film is peeled off and held by the pair of cross-linking holding portions 10d across the slit portion 10b is pinched by the wire clamping portion 13a and a terminal main body 13b when being inserted into the terminal mounting portion 10f (see Figs. 3A and 3D). When the stator core 9 is assembled in the bearing housing 7 to be assembled in the motor base portion 3, the distal end of the terminal 13 enters the board case 2 side and is inserted into a terminal inserting portion of the motor board 4 to be electrically connected (see Figs. 1D and 1E).

Here, an example of a manufacturing method of a motor will be described with reference to Figs. 1A to 3F. An assembling configuration of the stator 6 will be mainly described. The stator 6 is configured such that the magnet wire 11 is wound around the stator pole teeth 9b via the insulator 10 while the stator core 9 is held by a jig of the winding machine (not illustrated). As the winding machine, a general-purpose flyer winding machine, a nozzle winding machine, or the like is used.

For example, the magnet wire 11 wound around the U-phase stator pole tooth 9b is wired as the crossover wire 11a to an upper end surface of the annular wall 10a formed in the insulator 10 along the outer peripheral surface of the cross-linking holding portion 10d so as to fit into the recessed groove 10e provided to face each other via the slit portion 10b. In this case, the crossover wire 11a is bridged over the pair of cross-linking holding portions 10d across the slit portion 10b formed at the slot corresponding position (see Figs. 2A and 2B).

Next, similarly, the magnet wire 11 is wound around the V-phase stator pole tooth 9b by using the winding machine (not illustrated). When winding of the magnet wire 11 around the V-phase stator pole tooth 9b is completed, the magnet wire 11 is bridged and wired so as to be fitted into the recessed groove 10e provided to face each other via the slit portion 10b by routing on the upper end surface along the outer peripheral surface of the cross-linking holding portion 10d of the annular wall 10a formed in the insulator 10. The winding is also performed with respect to the adjacent W-phase stator pole tooth 9b by the same step.

When the winding with respect to all the stator pole teeth 9b is completed, as illustrated in Fig. 2B, the insulating film of the magnet wire 11 is peeled off by irradiating the crossover wire 11 a bridged over the pair of cross-linking holding portions 10d with the laser beam from a laser irradiating device 18 in the radial direction. As the laser irradiating device 18, a fiber laser oscillator is used. The fiber laser oscillator of which a condensing diameter is small, power consumption is low, and a resonator and an optical mirror are unnecessary compared with a CO₂ laser oscillator, a YAG laser oscillator, or the like, is suitably used. In the magnet wire 11, the insulating film of high heat-resistant resin (for example, polyester type, polyurethane type, polyimide type, polyamide imide type, polyester imide type resin, or the like) is formed in advance around the lead wire. Therefore, it is necessary to melt and peel off the insulating film and bonding the magnet wire to the terminal 13.

Therefore, as illustrated in Fig. 2B, the laser irradiating device 18 is disposed around the jig by which the stator core 9 is held inward in the radial direction. The crossover wire 11a bridged over the cross-linking holding portions 10d across the slit portions 10b at three locations is irradiated with the laser beam through a gap (stator slot) between the stator pole teeth 9b from the outside in the radial direction to melt and peel off a half circumference portion of the insulating film covering the crossover wire 11a. In addition, the crossover wire 11a is irradiated with the laser beam from the inside of the crossover wire 11a in the radial direction through the gap between the stator pole teeth 9b to melt and peel off the remaining half circumference portion of the insulating film covering the crossover wire 11a. The crossover wires 11a bridged over the pair of cross-linking holding portions 10d may be alternately irradiated with the laser beam by disposing the laser irradiating device 18 to face each other, or the crossover wire may be irradiated with the laser beam by rotating the jig by 180° to melt and remove the insulating film.

Therefore, the insulating film of the connecting portion with the external connecting terminal can be reliably peeled off irrespective of accuracy of the winding machine and presence or absence of the aligning winding. In addition, since the fiber laser beam has a small focus diameter, there is no possibility that the laser beam is applied to other than the crossover wire 11 a and there is no obstacle in a space on the stator slot in the radial direction irradiated with the laser beam. Therefore, processing can be easily performed.

As described above, in a state where the stator core 9 is fixed to the jig and the magnet wire is wound around the stator pole teeth by using the winding machine, the insulating film can be reliably melted and peeled off by irradiating the crossover wire 11a bridged over the cross-linking holding portions 10d with the laser beam in the radial direction of the stator core 9 through the slit portion 10b. The operation is repeated for the crossover wires 11 a provided at three locations by rotating the jig holding the stator core 9 by 120° at a time.

Next, as illustrated in Figs. 3A and 3B, the terminals 13 are respectively inserted into the terminal mounting portions 10f at three locations at positions corresponding to the slit portions 10b of the insulator 10. In this case, the crossover wire 11a held by the cross-linking holding portions 10d across the slit portion 10b is pinched by the wire clamping portion 13a of which the distal end portion is cut and standed in the terminal inserting direction to insert the terminal 13 into the terminal mounting portion 10f (see Fig. 3D). Therefore, when the terminal 13 is mounted on the terminal mounting portion 10f by closing the slit portion 10b, the crossover wire 11a of which the insulating film is peeled off is reliably clamped. Therefore, the assembling workability is improved.

Finally, resistance welding is performed by using the welding machine which is energized through the wire clamping portion 13a of the terminal 13, the crossover wire 11a clamped thereby, and the terminal main body 13b to be electrically connected. Since the insulating film of the crossover wire 11a is removed, the connection reliability with the terminal 13 is high. In addition, since an operation space for welding is secured, it is possible to manufacture the motor with simple facility at low cost.

As illustrated in Fig. 1C, the motor base portion 3 is stacked and assembled on the board case 2 in which the motor board 4 is stored and the cover 5 is assembled. The stator 6 assembled as describe above is assembled in the motor base portion 3 together with the bearing housing 7. The stator 6 is assembled while aligning the flange portion 10g standed and formed in the distal end of the stator pole tooth 9b of the insulator 10 with the motor base portion 3, and the outer peripheral edge portion of the flange portion 10g is integrally fixed with screws. In this case, the distal end portion of the terminal 13 is inserted into the terminal inserting portion disposed in the motor board 4 to be electrically connected (see Figs. 1D and 1E).

In addition, the rotor 14 is assembled so that the rotor magnet 17 is aligned to face the stator pole tooth 9b of the stator core 9 and the rotor shaft 15 is inserted into the bearing housing 7 so as to be rotatably supported by the bearings 8a and 8b. The rotor shaft 15 is disposed to penetrate the motor base portion 3 and enter the board case 2. However, since the motor board 4 is provided with a through-hole 4a, it does not interfere with the rotor shaft 15 (see Fig. 1C).

As described above, according to the invention, it is possible to provide the motor 1 in which connection reliability between the magnet wire 11 of which the insulating film can be reliably peeled off at a target position and the terminal 13 welded thereto is high irrespective of the accuracy of the winding machine and presence or absence of the aligning winding.

In addition, it is possible to provide the manufacturing method of a motor, in which an assembling workability of the motor 1 is improved and the motor can be manufactured at low cost with simple facility.

The motor is described with reference to the outer rotor type motor, but it is also applicable to an inner rotor type motor.

In addition, the stator 6 is not limited to 6 poles and 6 slots, but may be larger or smaller than those. Furthermore, the motor is not limited to three-phase motor, but may be a two-phase motor or a 4-phase or more motor.

## Claims

1. A motor (1) comprising:
a stator core (9) that includes a plurality of stator pole teeth (9b) radially protruding from an annular core back portion (9a);
an insulator (10) that covers the stator core (9);
a coil (12) that is formed by winding a magnet wire (11) around the stator pole teeth (9b) via the insulator (10);
a stator (6) that is mounted on the insulator (10) and includes an external connecting terminal (13) electrically connected to the magnet wire (11);
a rotor yoke (16) that rotates around a rotor shaft (15); and
a rotor (14) that includes a rotor magnet (17) disposed in the rotor yoke (16) to face the stator pole teeth (9b),
wherein an annular wall (10a) is formed in the insulator (10) covering the core back portion (9a),
wherein a notch portion (10c) is provided in a slot corresponding position of the annular wall (10a),
wherein at least a pair of cross-linking holding portions (10d) which is provided in both side walls of the notch portion (10c) and in which a crossover wire (11a) drawn out from the coil (12) is held across the notch portion (10c), and a terminal mounting portion (10f) in which the external connecting terminal (13) is mounted on the pair of cross-linking holding portions (10d) are provided, and
wherein the crossover wire (11a), which is bridged over the pair of cross-linking holding portions (10d) and of which the insulating film is peeled off, is welded to the external connecting terminal (13) mounted on the terminal mounting portion (10f) to be assembled thereto.

2. The motor according to claim 1,
wherein the external connecting terminal (13) is formed with a tongue-like cut in a part of the plate-like terminal and a wire clamping portion (13a) is formed by cutting and standing a distal end portion in a terminal inserting direction, and the external connecting terminal (13) is assembled by being inserted into the terminal mounting portion (10f) and pinching the crossover wire (11a) that is held by the pair of cross-linking holding portions (10d) across the notch portion (10c) in the wire clamping portion (13a).

3. A manufacturing method of a motor (1) including a stator core (9) that includes a plurality of stator pole teeth (9b) radially protruding from an annular core back portion (9a), an insulator (10) that covers the stator core (9), a coil (12) that is formed by winding a magnet wire (11) around the stator pole teeth (9b) via the insulator (10), a stator (6) that is mounted on the insulator (10) and includes an external connecting terminal (13) electrically connected to the magnet wire (11), a rotor yoke (16) that rotates around a rotor shaft (15), and a rotor (14) that includes a rotor magnet (17) disposed in the rotor yoke (16) to face the stator pole teeth (9b), the method comprising:
a step of winding the magnet wire (11) around the stator pole teeth (9b) via the insulator (10) while the stator core (9) is held by a jig;
a step of bridging the crossover wire (11a) drawn out from the coil (12) wound around the stator pole teeth (9b) in at least a pair of cross-linking holding portions (10d) formed via a notch portion (10c) formed in an annular wall (10a) formed in the insulator (10) covering the core back portion (9a) across the notch portion (10c);
a step of peeling off an insulating film of the magnet wire (11) by irradiating the crossover wire (11a) bridged over the pair of cross-linking holding portions (10d) with a laser beam in a radial direction of the stator core (9);
a step of mounting the external connecting terminal (13) in a terminal mounting portion (10f) formed in the pair of cross-linking holding portions (10d) with the crossover wire (11a), of which the insulating film is peeled off, clamped therebetween; and
a step of electrically connecting the external connecting terminal (13) and the crossover wire (11a) clamped thereby to each other by resistance welding.

4. The manufacturing method of a motor according to claim 3,
wherein a half circumference portion of the insulating film covering the crossover wire (11a) is melted and peeled off by irradiating the crossover wire (11a) bridged over the cross-linking holding portions (10d) across the notch portion (10c) with the laser beam from an outside of the stator core (9) in the radial direction through a gap between the stator pole teeth (9b), and the remaining half circumference portion of the insulating film covering the crossover wire (11a) is melted and peeled off by irradiating the crossover wire (11a) with the laser beam from an inside of the crossover wire (11a) in the radial direction through the gap between the stator pole teeth (9b).

5. The manufacturing method of a motor according to claim 3 or 4,
wherein in the external connecting terminal (13), a tongue-like cut is formed in a part of the plate-like terminal and a wire clamping portion (13a) is formed by cutting and standing a distal end portion in a terminal inserting direction, the crossover wire (11a) held by the cross-linking holding portions (10d) across the notch portion (10c) is pinched by the wire clamping portion (13a), and the external connecting terminal (13) is inserted into the terminal mounting portion (10f).
